# EUROPEAN PATENT SPECIFICATION

(11) **EP 4 085 363 B1**
(45) Date of publication and mention of the grant of the patent: **06.05.2026**
(21) Application number: 20824588.6
(22) Date of filing: 18.12.2020
(51) Int. Cl.: G06F 21/56

(54) **CODE-BASED MALWARE DETECTION**
CODE-BASIERTE MALWARE-ERKENNUNG
DÉTECTION DE LOGICIELS MALVEILLANTS BASÉE SUR DES CODES

(30) Priority: 05.01.2020 EP 20150296
(43) Date of publication of application: 09.11.2022
(73) Proprietor: British Telecommunications public limited company, London E1 8EE (GB)
(72) Inventor: EL-MOUSSA, Fadi, London EC4V 5BT (GB)
(74) Representative: British Telecommunications public limited company Intellectual Property Department
(86) International application number: PCT/EP2020/087117
(87) International publication number: WO 2021/136694

(56) References cited:
- WO-A1-2016/048559
- US-A1- 2016 306 971
- SEXTON JOSEPH ET AL: "Subroutine based detection of APT malware", JOURNAL OF COMPUTER VIROLOGY AND HACKING TECHNIQUES, SPRINGER PARIS, PARIS, vol. 12, no. 4, 21 December 2015 (2015-12-21), pages 225 - 233, XP036077218, DOI: 10.1007/S11416-015-0258-7

## Description

The present invention relates to the detection of malicious software code.

Traditional malware detection is based on the generation of signatures of malware code such as by hashing of all or part of known malware to provide a suitable and efficient basis for comparison at malware scanning time. This suffers from missed detection due to minor changes to malware - a single bit change in a malware can result in an entirely different signature and non-detection. Existing approaches to address this challenge can involve modularising malware into smaller components for which signatures are generated such that a granularity of signature generation can be finer. This permits detection of malware where there is wholesale identity within any particular module in dependence on module size, though malware adapts to include minor adjustments throughout the content of the malware to undermine any such granular signature generation. Accordingly, it is beneficial to provide improvements in the detection of malware.

In SEXTON, JOSEPH ET AL: "Subroutine based detection of APT malware", JOURNAL OF COMPUTER VIROLOGY AND HACKING TECHIQUES, SPRINGER PARIS, vol. 12, no. 4, 21 December 2015, pages 225-233 (XP036077218), executable code is disassembled and classified using opcode sequences.

According to a first aspect of the present invention, there is provided a computer implemented method of detecting malware in a received software component comprising: generating a profile for the malware by the steps of: a) accessing machine code for the malware; b) identifying a subset of the machine code for the malware as a logical subroutine of the malware; c) extracting one or more features of the logical subroutine of the malware as the profile, the features comprising one or more of: a number of processor registers used in the logical subroutine; an identification of registers used in the logical subroutine; a stack size used in the logical subroutine; and a location or range of locations of a memory region accessed in the logical subroutine, accessing machine code for the received software component to identify a plurality of logical subroutines thereof; extracting one or more features of each logical subroutine of the received software component for comparison with the profile to detect the malware in the received software component.

Preferably, a feature of a logical subroutine includes an identification of one or more operating system application programming interface calls in the logical subroutine.

Preferably, identifying a logical subroutine in machine code includes one or more of: identifying a series of machine code instructions accessed via a jump, branch or conditional machine code instruction; identifying a series of machine code instructions collocated in the machine code; identifying a series of machine code instructions collocated in the machine code and bounded by subroutine identifiers; and executing the machine code and monitoring the execution to trace execution paths through the machine code wherein a repeated series of machine code instructions within an execution path is determined to correspond to a logical subroutine of the machine code.

Preferably, identifying a logical subroutine in machine code includes disassembling the Preferably, detection of the malware in the received software component is based on identity of one or more of: a number of registers used in the logical subroutine of each of the received software component and the malware; a stack size used in the logical subroutine of each of the received software component and the malware; a location or range of locations of a memory region accessed in the logical subroutine of each of the received software component and the malware; and an identification of one or more operating system application programming interface calls in the logical subroutine of each of the received software component and the malware.

Preferably, detection of the malware in the received software component is based on score determined by the comparison in which the score is based on a degree of similarity of any or all of: a number of registers used in the logical subroutine of each of the received software component and the malware; a stack size used in the logical subroutine of each of the received software component and the malware; a location or range of locations of a memory region accessed in the logical subroutine of each of the received software component and the malware; and an identification of one or more operating system application programming interface calls in the logical subroutine of each of the received software component and the malware.

According to a second aspect of the present invention, there is a provided a computer system including a processor and memory storing computer program code for performing the steps of the method set out above. According to a third aspect of the present invention, there is a provided a computer system including a processor and memory storing computer program code for performing the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of an arrangement for detecting malware in a received software component in accordance with embodiments of the present invention; and
Figure 3 is a flowchart of a method for detecting malware in a received software component in accordance with embodiments of the present invention.

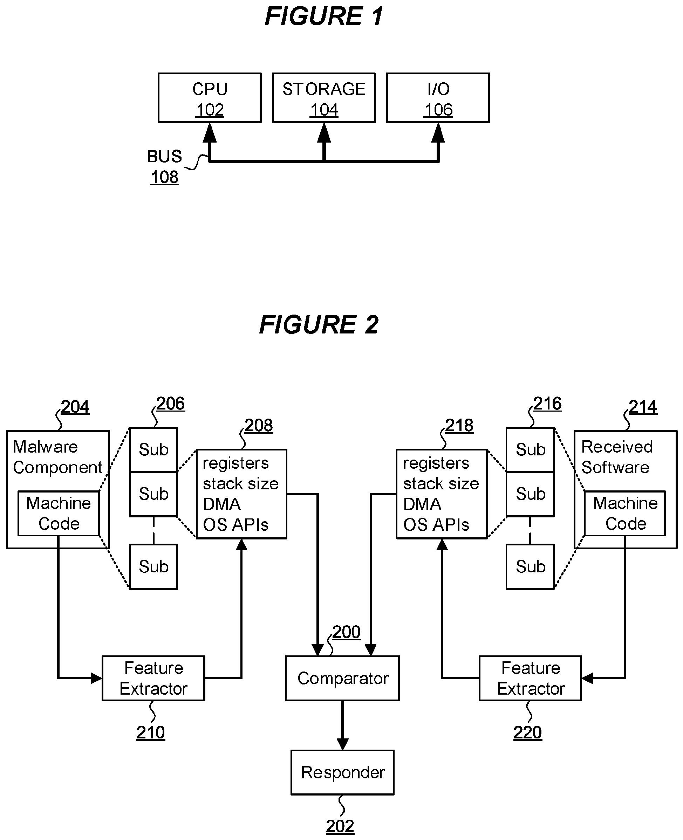

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement for detecting malware in a received software component in accordance with embodiments of the present invention. A malware component 204 as an executable software component including executable machine code is processed to generate a profile 208 for the malware 204 as one or more data structure representations of features of the malware. In particular, the profile 208 corresponds to features of one or more logical subroutines 206 of the malware component 204. A logical subroutine is a subset of machine code comprised in the malware component 204 that comprises one or more sequences of machine code instructions. Each subroutine 206 is identified based on an analysis of the machine code for the malware component 204. Notably, subroutines defined by one or more programmers, or generated by one or more code generators such as a compiler, assembler or the like, are not necessarily the same as, or the whole extent of, the subroutines identified based on the analysis since the analysis according to embodiments of the present invention for the identification of the subroutines 206 is performed on executable machine code for the malware component 204 that may not have access to source code, source assembler code or the like. Accordingly, the subroutines identified in accordance with embodiments of the present invention are inferred and thus referred to as logical subroutines that may or may not, or may to some extent, correspond to subroutines explicitly created, generated, or programmed in the machine code.

In the embodiment of Figure 2, a feature extractor 210 is provided as a hardware, software, firmware or combination component arranged to identify a subset of the machine code of the malware component 204 as a logical subroutine of the malware. The feature extractor 210 accesses the machine code for the malware component 204 that may be provided as machine code instructions in, for example, binary or hexadecimal representation, or assembly language instructions in, for example, a textual representation. In one embodiment, the machine code is disassembled by a disassembler computing component as is known in the art, in which case the feature extractor 210 is operable on an assembly language representation of the machine code.

The feature extractor 210 identifies the logical subroutine in the machine code based on, for example, inter alia: an identification of a series of machine code instructions in the code accessed via a jump, branch or conditional machine code instruction; an identification of a series of machine code instructions in the code collocated in the machine code; an identification of a series of machine code instructions collocated in the machine code and bounded by subroutine identifiers, such as identifiers in an assembler language representation of the machine code; and an execution of the machine code and monitoring the execution to trace execution paths through the machine code such that a repeated series of machine code instructions within an execution path is determined to correspond to a logical subroutine of the machine code. Notably, in use, the feature extractor 210 can identify multiple such logical subroutines in which case embodiments of the invention as described below can be operable on each or some subset of all identified logical subroutines.

The feature extractor 210 is further operable to extract one or more features of an identified logical subroutine to generate and define a profile 204 for the malware. Features of the logical subroutine can include one or more of, inter alia: a number of processor registers used in the logical subroutine; an identification of registers used in the logical subroutine; a stack size used in the logical subroutine, such as a stack size indicated by a stack size (SS) register or the like; a location or range of locations of a memory region accessed in the logical subroutine, such as by direct memory access (DMA); and an identification of one or more Operating System (OS) Application Programming Interface (API) calls in the logical subroutine, such as OS functions for the allocation, deallocation, reserving or otherwise using memory of a computer system. Such features can be stored in a profile 208 such as a data structure or the like.

In use, software 214 is received or otherwise accessed by a computer system such as software received or downloaded via a network such as the internet, or software stored by a computer system selected for execution by the computer system. Such received software 214 is analysed in accordance with embodiments of the present invention for the identification of all or part of the malware component 204 therein. A feature extractor 220 is provided, which can be one and the same as feature extractor 210, to analyse executable machine code of the received software 214 substantially as hereinbefore described with reference to the analysis of feature extractor 210 of the malware component 204. In particular, the feature extractor 220 identifies a plurality of logical subroutines in the machine code of the received software 214, for example using techniques described above. Further, the feature extractor 220 extracts features of identified logical subroutines in the machine code of the received software 214 as a feature set 218, one such set being provided for each logical subroutine identified in the machine code of the received software 214. Features extracted by the feature extractor 220 are consistent with, and can include a subset of, those features described above with respect the feature extractor 210 operable with the machine code of the malware component 204.
A comparator 200 is provided as a hardware, software, firmware or combination component for comparing the malware profile 208 with the feature set 218 of each identified logical subroutine of the received software 214. Such comparison is suitable for identifying identities or similarities between the profile 208 of the malware 204 and the features 218 of subroutines 216 in the received software 214. In this way, presence of all or part of the malware 204 in the received software 214 can be predicted. The comparison by the comparator 200 can be based on predetermined criteria for the comparator 200 to determine that there is sufficient similarity or identity of features to conclude that malware is present in the received software 214. For example, a minimum number of identical or similar features may be required. In one embodiment, the comparator 200 can operate on the basis of a scoring of similar or identical features such that certain features can be weighted more highly than others with a threshold score being used to determine when sufficient similarity of features is reached to determine a likelihood of presence of malware in the received software 214. For example, the score can be based on a degree of similarity or identity of any or all of, inter alia: a number of registers used in the logical subroutine of each of the received software component 214 and the malware 204; a stack size used in the logical subroutine of each of the received software component 214 and the malware 204; a location or range of locations of a memory region accessed in the logical subroutine of each of the received software component 214 and the malware 204; and an identification of one or more operating system application programming interface calls in the logical subroutine of each of the received software component 214 and the malware 204.

When the comparator 200 determines or predicts a likelihood of malware in the received software 214, a responder component 202 is triggered to provide a responsive action to the malware detection. The responder 202 is a hardware, software, firmware or combination component operable responsive to the comparator 200 to respond to a determination that there is, or there is a likelihood of, malware in the received software 214. The responder can undertake responsive actions such as, inter alia: isolating, quarantining or deleting the received software 214; trigger further scanning of the received software 214; alerting a user as to the existence of the received software 214; dispatch, send or otherwise communicate the received software 214to a malware reporting, scanning or protection component; utilise the received software 214 as input to train a further, additional or downstream malware detection component; add the received software 214 to a register of detected malware; and other responsive measures as will be apparent to those skilled in the art.

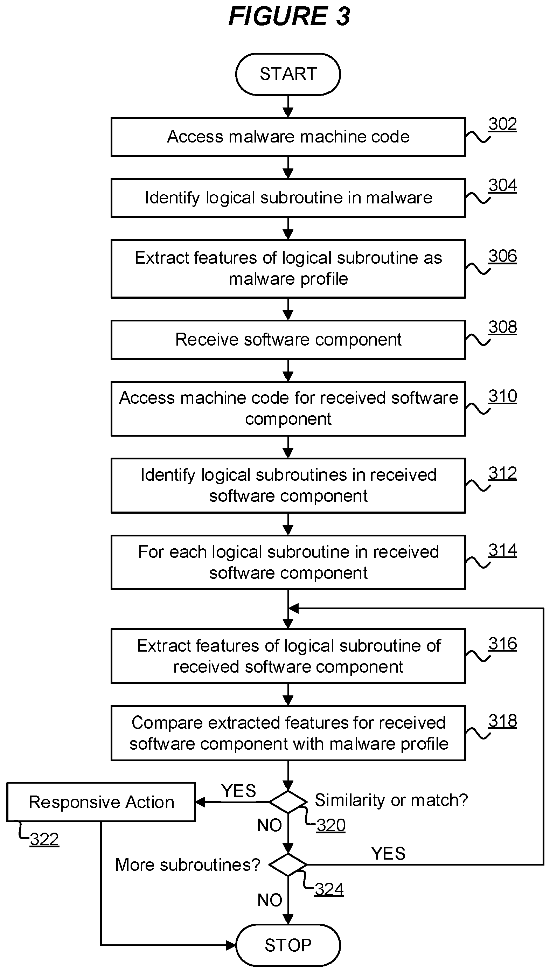

Figure 3 is a flowchart of a method for detecting malware in a received software component in accordance with embodiments of the present invention. Initially, at step 302, the method accesses machine code for a malware component 204. At step 304 the feature extractor 210 identifies a logical subroutine in the machine code of the malware 204. At step 306 the feature extractor 210 extracts features of the logical subroutine for storage as a profile 208. At step 308 the method receives or accesses a new software component 214 to be scanned for malware. At step 310 the method accesses machine code of the received software component 214 and at step 312 the method identifies one or more logical subroutines 216 in the received software component 214. At step 314 the method loops through each identified logical subroutine 216 in the received software component 214 and at step 316 the method extracts features of a current logical subroutine of the received software component. At step 318 the method compares the extracted features of the current logical subroutine with the features of the malware profile 208 and, where these match at step 320, responsive action(s) are triggered at step 322. The loop through the logical subroutines of the received software 214 is continued at step 324.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

## Claims

1. A computer implemented method of detecting malware in a received software component (214) comprising:
generating a profile (208) for the malware (204) by the steps of:
a) accessing (302) machine code for the malware;
b) identifying (304) a subset of the machine code for the malware as a logical subroutine (206) of the malware;
c) extracting (306) one or more features of the logical subroutine of the malware as the profile (208), the features comprising one or more of: a number of processor registers used in the logical subroutine; an identification of registers used in the logical subroutine; a stack size used in the logical subroutine; and a location or range of locations of a memory region accessed in the logical subroutine,
accessing (310) machine code for the received software component (214) to identify (312) a plurality of logical subroutines thereof;
extracting (316) one or more features (218) of each logical subroutine of the received software component for comparison (318) with the profile to detect the malware in the received software component (214).

2. The method of claim 1 wherein a feature of a logical subroutine includes an identification of one or more operating system application programming interface calls in the logical subroutine.

3. The method of any preceding claim wherein identifying a logical subroutine in machine code includes one or more of: identifying a series of machine code instructions accessed via a jump, branch or conditional machine code instruction; identifying a series of machine code instructions collocated in the machine code; identifying a series of machine code instructions collocated in the machine code and bounded by subroutine identifiers; and executing the machine code and monitoring the execution to trace execution paths through the machine code wherein a repeated series of machine code instructions within an execution path is determined to correspond to a logical subroutine of the machine code.

4. The method of any preceding claim wherein identifying a logical subroutine in machine code includes disassembling the machine code to an assembler language representation of the machine code.

5. The method of any preceding claim wherein detection of the malware in the received software component is based on identity of one or more of: a number of registers used in the logical subroutine of each of the received software component and the malware; a stack size used in the logical subroutine of each of the received software component and the malware; a location or range of locations of a memory region accessed in the logical subroutine of each of the received software component and the malware; and an identification of one or more operating system application programming interface calls in the logical subroutine of each of the received software component and the malware.

6. The method of any preceding claim wherein detection of the malware in the received software component is based on score determined by the comparison in which the score is based on a degree of similarity of any or all of: a number of registers used in the logical subroutine of each of the received software component and the malware; a stack size used in the logical subroutine of each of the received software component and the malware; a location or range of locations of a memory region accessed in the logical subroutine of each of the received software component and the malware; and an identification of one or more operating system application programming interface calls in the logical subroutine of each of the received software component and the malware.

7. A computer system including a processor (102) and memory (104) storing computer program code for performing the steps of the method of any preceding claim.

8. A computer program element comprising computer program code to, when loaded into a computer system and executed thereon, cause the computer to perform the steps of a method as claimed in any of claims 1 to 6.

## Patentansprüche

1. Computerimplementiertes Verfahren zum Detektieren von Malware in einer empfangenen Softwarekomponente (214), umfassend:
Erzeugen eines Profils (208) für die Malware (204) durch die folgenden Schritte:
a) Zugreifen (302) auf Maschinencode für die Malware;
b) Identifizieren (304) einer Teilmenge des Maschinencodes für die Malware als logische Subroutine (206) der Malware;
c) Extrahieren (306) eines oder mehrerer Merkmale der logischen Subroutine der Malware als Profil (208), wobei die Merkmale eines oder mehrere von Folgendem umfassen:
eine Anzahl von Prozessorregistern, die in der logischen Subroutine verwendet werden; eine Identifizierung von Registern, die in der logischen Subroutine verwendet werden; eine Stapelgröße, die in der logischen Subroutine verwendet wird; und einen Speicherort oder eine Reihe von Speicherorten eines Speicherbereichs, auf den in der logischen Subroutine zugegriffen wird,
Zugreifen (310) auf Maschinencode für die empfangene Softwarekomponente (214), um eine Mehrzahl von logischen Subroutinen davon zu identifizieren (312);
Extrahieren (316) eines oder mehrerer Merkmale (218) jeder logischen Subroutine der empfangenen Softwarekomponente zum Vergleich (318) mit dem Profil, um die Malware in der empfangenen Softwarekomponente (214) zu detektieren.

2. Verfahren nach Anspruch 1, wobei ein Merkmal einer logischen Subroutine eine Identifizierung eines oder mehrerer Aufrufe einer Anwendungsprogrammierschnittstelle des Betriebssystems in der logischen Subroutine umfasst.

3. Verfahren nach einem der vorhergehenden Ansprüche, wobei das Identifizieren einer logischen Subroutine im Maschinencode eines oder mehrere von Folgendem beinhaltet: Identifizieren einer Reihe von Maschinencodeanweisungen, auf die über eine Sprung-, Verzweigungs- oder bedingte Maschinencodeanweisung zugegriffen wird; Identifizieren einer Reihe von Maschinencodeanweisungen, die in dem Maschinencode gemeinsam angeordnet sind; Identifizieren einer Reihe von Maschinencodeanweisungen, die in dem Maschinencode gemeinsam angeordnet und durch Subroutinekennungen begrenzt sind; und Ausführen des Maschinencodes und Überwachen der Ausführung, um Ausführungspfade durch den Maschinencode zu verfolgen, wobei bestimmt wird, dass eine wiederholte Reihe von Maschinencodeanweisungen innerhalb eines Ausführungspfades einer logischen Subroutine des Maschinencodes entspricht.

4. Verfahren nach einem der vorhergehenden Ansprüche, wobei das Identifizieren einer logischen Subroutine im Maschinencode Zerlegen des Maschinencodes in eine Assemblersprachendarstellung des Maschinencodes beinhaltet.

5. Verfahren nach einem der vorhergehenden Ansprüche, wobei die Detektion der Malware in der empfangenen Softwarekomponente auf der Identität von einem oder mehreren von Folgendem basiert: einer Anzahl von Registern, die in der logischen Subroutine von jeder von der empfangenen Softwarekomponente und der Malware verwendet werden; einer Stapelgröße, die in der logischen Subroutine von jeder von der empfangenen Softwarekomponente und der Malware verwendet wird; einem Speicherort oder einer Reihe von Speicherorten eines Speicherbereichs, auf den in der logischen Subroutine von jeder von der empfangenen Softwarekomponente und der Malware zugegriffen wird; und einer Identifizierung eines oder mehrerer Aufrufe einer Anwendungsprogrammierschnittstelle des Betriebssystems in der logischen Subroutine von jeder von der empfangenen Softwarekomponente und der Malware.

6. Verfahren nach einem der vorhergehenden Ansprüche, wobei die Detektion der Malware in der empfangenen Softwarekomponente auf einer Bewertung basiert, die durch den Vergleich bestimmt wird, bei dem die Bewertung auf einem Ähnlichkeitsgrad von einem oder allen von Folgendem basiert: einer Anzahl von Registern, die in der logischen Subroutine von jeder von der empfangenen Softwarekomponente und der Malware verwendet werden; einer Stapelgröße, die in der logischen Subroutine von jeder von der empfangenen Softwarekomponente und der Malware verwendet wird; einem Speicherort oder einer Reihe von Speicherorten eines Speicherbereichs, auf den in der logischen Subroutine von jeder von der empfangenen Softwarekomponente und der Malware zugegriffen wird; und einer Identifizierung eines oder mehrerer Aufrufe einer Anwendungsprogrammierschnittstelle des Betriebssystems in der logischen Subroutine von jeder von der empfangenen Softwarekomponente und der Malware.

7. Computersystem, umfassend einen Prozessor (102) und einen Speicher (104), der Computerprogrammcode zum Ausführen der Schritte des Verfahrens nach einem der vorhergehenden Ansprüche speichert.

8. Computerprogrammelement, umfassend Computerprogrammcode, der, wenn in ein Computersystem geladen und darauf ausgeführt, den Computer veranlasst, die Schritte eines Verfahrens nach einem der Ansprüche 1 bis 6 auszuführen.

## Revendications

1. Procédé, mis en œuvre par ordinateur, de détection d'un logiciel malveillant dans un composant logiciel (214) reçu, comprenant :
la génération d'un profil (208) pour le logiciel malveillant (204) par les étapes suivantes :
a) accès (302) à un code machine pour le logiciel malveillant ;
b) identification (304) d'un sous-ensemble du code machine pour le logiciel malveillant en tant que sous-routine logique (206) du logiciel malveillant ;
c) extraction (306) d'une ou de plusieurs caractéristiques de la sous-routine logique du logiciel malveillant en tant que profil (208), les caractéristiques comprenant un ou plusieurs des éléments suivants : un nombre de registres de processeur utilisés dans la sous-routine logique ; une identification de registres utilisés dans la sous-routine logique ; une taille de pile utilisée dans la sous-routine logique ;
et un emplacement ou une plage d'emplacements d'une zone mémoire à laquelle il est accédé dans la sous-routine logique,
accès (310) à un code machine pour le composant logiciel (214) reçu afin d'identifier (312) une pluralité de sous-routines logiques de celui-ci ;
extraction (316) d'une ou de plusieurs caractéristiques (218) de chaque sous-routine logique du composant logiciel reçu pour comparaison (318) avec le profil afin de détecter le logiciel malveillant dans le composant logiciel (214) reçu.

2. Procédé selon la revendication 1, dans lequel une caractéristique d'une sous-routine logique comporte une identification d'un ou de plusieurs appels d'interface de programmation d'applications de système d'exploitation dans la sous-routine logique.

3. Procédé selon l'une quelconque des revendications précédentes, dans lequel l'identification d'une sous-routine logique dans un code machine comporte une ou plusieurs des opérations suivantes : identification d'une série d'instructions de code machine auxquelles il est accédé via une instruction de saut, de branchement ou conditionnelle de code machine ; identification d'une série d'instructions de code machine co-localisées dans le code machine ; identification d'une série d'instructions de code machine co-localisées dans le code machine et délimitées par des identifiants de sous-routine ; et exécution du code machine et surveillance de l'exécution afin de suivre des chemins d'exécution à travers le code machine, une série répétée d'instructions de code machine au sein d'un chemin d'exécution étant déterminée comme correspondant à une sous-routine logique du code machine.

4. Procédé selon l'une quelconque des revendications précédentes, dans lequel l'identification d'une sous-routine logique dans un code machine comporte le désassemblage du code machine en une représentation en langage assembleur du code machine.

5. Procédé selon l'une quelconque des revendications précédentes, dans lequel la détection du logiciel malveillant dans le composant logiciel reçu est basée sur l'identité d'un ou de plusieurs des éléments suivants : un nombre de registres utilisés dans la sous-routine logique du composant logiciel reçu d'une part et du logiciel malveillant d'autre part ; une taille de pile utilisée dans la sous-routine logique du composant logiciel reçu d'une part et du logiciel malveillant d'autre part ; un emplacement ou une plage d'emplacements d'une zone mémoire à laquelle il est accédé dans la sous-routine logique du composant logiciel reçu d'une part et du logiciel malveillant d'autre part ; et une identification d'un ou de plusieurs appels d'interface de programmation d'applications de système d'exploitation dans la sous-routine logique du composant logiciel reçu d'une part et du logiciel malveillant d'autre part.

6. Procédé selon l'une quelconque des revendications précédentes, dans lequel la détection du logiciel malveillant dans le composant logiciel reçu est basée sur un score déterminé par la comparaison dans laquelle le score est basé sur un degré de similarité de tout ou partie des éléments suivants : un nombre de registres utilisés dans la sous-routine logique du composant logiciel reçu d'une part et du logiciel malveillant d'autre part ; une taille de pile utilisée dans la sous-routine logique du composant logiciel reçu d'une part et du logiciel malveillant d'autre part ; un emplacement ou une plage d'emplacements d'une zone mémoire à laquelle il est accédé dans la sous-routine logique du composant logiciel reçu d'une part et du logiciel malveillant d'autre part ; et une identification d'un ou de plusieurs appels d'interface de programmation d'applications de système d'exploitation dans la sous-routine logique du composant logiciel reçu d'une part et du logiciel malveillant d'autre part.

7. Système informatique comportant un processeur (102) et une mémoire (104) stockant un code de programme informatique destiné à réaliser les étapes du procédé selon l'une quelconque des revendications précédentes.

8. Élément de programme informatique comprenant un code de programme informatique pour, lorsqu'il est chargé dans un système informatique et exécuté sur celui-ci, amener l'ordinateur à réaliser les étapes d'un procédé tel que revendiqué à l'une quelconque des revendications 1 à 6.
